# EUROPÄISCHE PATENTSCHRIFT

(11) **EP 1 138 654 B1**
(45) Veröffentlichungstag und Bekanntmachung des Hinweises auf die Patenterteilung: **14.05.2008**
(21) Anmeldenummer: 00106876.6
(22) Anmeldetag: 31.03.2000
(51) Int. Cl.: C04B 35/80, C04B 35/573, G02B 5/08

(54) **Verfahren zum Herstellen eines kohlenstofffaserverstärkten keramischen Bauteils mit einer festen keramischen und porenfreien Beschichtung**
Process for Making a carbon fibre reinforced ceramic element with a hard ceramic and pore-free coating
Procédé de fabrication d'un élément en céramique renforcé par fibres de carbone avec un revêtement en céramique dur et sans pore.

(43) Veröffentlichungstag der Anmeldung: 04.10.2001
(73) Patentinhaber: ECM Ingenieur-Unternehmen für Energie-und Umwelttechnik GmbH, 80339 München (DE)
(72) Erfinder: Krödel, Matthias, 85521 Ottobrunn (DE); Rosenlöcher, Jens, 81371 München (DE); Goedtke, Peter, 81667 München (DE)
(74) Vertreter: Meissner, Bolte & Partner

(56) Entgegenhaltungen:
- EP-A- 0 032 097
- EP-A- 0 558 991
- DE-A- 4 329 551

## Beschreibung

Die Erfindung betrifft ein Verfahren zur Herstellung eines Bauteils nach den Anspruch 1.

Die EP 0 032 097 A1 offenbart ein Verfahren zur Herstellung einer Siliziumcarbidstruktur. Dort wird von einer bestehenden Kohlenstoffstruktur ausgegangen, die während eines Durchgangs durch ein Bad imprägniert wird, das ein flüchtiges Harz, Siliziumpulver und ein Lösungsmittel aufweist. Im Verlauf einer thermischen Behandlung wird das flüchtige Harz vollständig entfernt, während das Siliziumpulver mit dem Kohlenstoff zu Siliziumcarbid reagiert. Ein Restkohlenstöffgehalt kann durch eine Änderung der Imprägnier-Bad-Zusammensetzung eingestellt werden. Das dortige Verfahren ist zwar geeignet, eine Siliziumcarbidstruktur als Ganzes zu erzeugen, jedoch ist es mit dortigem Verfahren unmöglich, auf eine bestehende Siliziumcarbidstruktur nachträglich eine Beschichtung aufzubringen, die hochfest mit der Siliziumcarbidstruktur verbunden ist und mit dieser einheitliche Werkstoffeigenschaften aufweist.

Ein weiteres Verfahren zur Herstellung eines Siliziumcarbidkörpers ist in der US 4,514,346 beschrieben. Dort wird eine Mischung aus Siliziumpulver, einem Harz und Kohlenstoff als Ausgangsmaterial verwendet und zu einem Formkörper verarbeitet. Der dortige Formkörper weist jedoch, insbesondere an seinen äußeren Oberflächen eine Porosität auf und ist somit für optische Anwendungen nicht brauchbar.

Aus DE 4 243 864.0-45 ist bekannt, dass zur Herstellung von Formkörpern aus reaktionsgebundenem, mit Silizium infiltriertem Siliziumcarbid ein wässriger Schlicker aus Siliziumcarbid, kolloidalem Kohlenstoff, Hilfsstoffen und einem flüssigen Medium verwendet wird.

Aus DE 3 018 785 C2 ist bekannt, dass eine Sintermasse, welche aus dem gleichen Werkstoff ist wie das Trägermaterial und sich andererseits aus einer Körnung, kleinen Röhrchen, Plättchen und Stäbchen oder aus einer Mischung daraus zusammensetzt, zur Herstellung von Leichtgewichtsspiegeln aus Glas verwendet wird.

Aus DE 4 111 190 A1 ist bekannt, dass Kohlenstoffkörper mit einer oberflächlichen Beschichtung aus SiSiC beschichtet werden. Im Wesentlichen handelt es sich hierbei um die Beschichtung von Graphit mit Siliziumcarbid. Die Schicht wird mit flüssigem Silizium infiltriert, wobei durch die oberflächliche Reaktion des Kohlenstoffgrundkörpers mit Si zu SiC ein fester Materialverbund entsteht. Die aufgetragene und infiltrierte SiSiC-Schicht kann durch entsprechende Bearbeitungsschritte behandelt werden.

Aus DE 3 819 011 A1 ist bekannt, dass auf einem kohlefaserverstärktem, kohlenstoffhaltigein Werkstoff oder einem glasimprägniertem, kohlefaserverstärktem, kohlenstoffhaltigem Werkstoff auf der Oberfläche eine Glasschicht aufgebracht wird, die entsprechend bearbeitet wird.

Aus DE 4 329 551 A1 ist bekannt, dass faserverstärkte Keramiken wie C/C, C/SiC und SiC/SiC als Trägermaterial verwendet werden. Die hochgenauen Oberflächen werden mittels physikalischer oder chemischer Gasphasenabscheidung oder thermischer Spritztechnik oder Elektrolyse anschließend hergestellt.

Der Erfindung liegt die Aufgabe zu Grunde, ein keramisches Beschichtungssystem und einen damit beschichteten Körper zur Verfügung zu stellen, wobei das Beschichtungssystem das in seinen Werkstoffeigenschaften an ein zu beschichtendes keramisches C/SiC-Substrat genau angepasst ist, so dass das mit dem Beschichtungssystem beschichtete Substrat auch unter extremen Temperaturbedingungen bzw. -schwankungen fest mit der aufgebrachten Beschichtung verbunden ist und zwischen Beschichtung und Substrat keine Inhomogenitäten auftreten, die unweigerlich zu einer Rissbildung führen würden.

Diese Aufgabe wird durch ein Verfahren nach Anspruch 1 gelöst.

Die Herstellung der Suspension für die keramische Beschichtung erfolgt nach den im Folgenden dargestellten Einzelschritten.

Unter Zugabe des Bindemittels wird das Siliziumcarbidpulver vermischt. Als Bindemittel werden Phenolharze, Polysiloxane oder Phosphate verwendet. Das verwendete Siliziumcarbidpulver weist eine annähernd lückenlose kontinuierliche Korngrößenverteilung mit einer maximalen Korngröße von weniger als 50 µm auf. Die Viskosität des 2-StoffGemisches aus Siliziumcarbidpulver und Bindemittel wird auf eine ölige Konsistenz durch die Zugabe des Lösungsmittels eingestellt. Vorzugsweise wird als Lösungsmittel ein Gemisch aus Isopropylalkohol, Butylacetat, Butandiol und Polyethylenglykol verwendet. Dieses ölige Gemisch wird mittels eines handelsüblichen Homogenisators dispergiert. Nach der Homogenisierungszeit wird der Kohlenstoff, vorzugsweise in Form von Feinstgraphit oder Ruß, zugegeben. Nach dieser Zugabe wird das Stoffsystem nun wiederum in dem Homogenisator suspendiert. Als letztes wird das metallische Pulver, vorzugsweise metallisches Silizium zugegeben und anschließend wird das gesamte Stoffsystem nochmals homogenisiert, wobei metallisches Siliziumpulver mit einer Korngröße von weniger als 45 µm, vorzugsweise von weniger als 5 µm verwendet wird. Während des gesamten Homogenisierungsprozesses wird stets Lösungsmittel zugegeben, um die für die spätere Anwendung notwendige Viskosität einzustellen. Die Viskosität richtet sich im Wesentlichen nach dem

Beschichtungsverfahren, mit welchem das Substrat später beschichtet werden soll. Die Viskosität richtet sich im Wesentlichen nach dem Beschichtungsverfahren, mit welchem das Substrat später beschichtet werden soll. Während des Homogenlsierungsprozesses wird die Viskosität mit einem handelsüblichen Viskosimeter oder Auslaufbecher kontrolliert.

Bevor das C/SiC-Substrat mit dem vorgenannten Stoffsystem beschichtet werden kann, muss dieses noch entsprechend vorbereitet werden. In der Regel besitzen die Bauteile nach dem Sillzierprozess, in dem die Kohlenstoffmatrix mit flüssigem Silizium infiltriert wird, noch Restsiliziumanbackungen auf den Oberflächen. Diese müssen in einem ersten Schritt, vorzugsweise mit Hilfe von Strahlmitteln, entfernt werden. Anschließend werden die zu beschichtenden Flächen mittels Schlelfwerkzeugen planparallel geschliffen, wobei eine Rautiefe von s 10 µm anzustreben ist.

Nachdem das Substrat nun in der vorgenannten Weise für die Beschichtung vorbereitet ist, wird das Stoffsystem auf das C/SiC-Substrat aufgebracht. Dieses Aufbringen erfolgt vorzugsweise mit Hilfe von Lackierwerkzeugen mit permanentem Rührbecher, um einer Entmischung der Suspension entgegenzuwirken. Eine derartige Entmischung würde das gesamte Stoffsystem für eine Beschichtung dahingehend unbrauchbar machen, dass es zu Inhomogenitäten an einzelnen Stellen zwischen der Beschichtung und dem Substrat bzw. zu Fehlstellen in der Beschichtung kommen würde.

Die Beschichtung erfolgt in mehreren Einzelschritten, d. h. die gesamte Beschichtung wird in mehreren Schichten aufgetragen. Hierbei werden Einzelschichten bis zu 0,3 mm erreicht. Nach jedem Beschichtungsvorgang muss eine Trocknung der jeweiligen Schicht vorgenommen werden. Hierbei richtet sich die Trocknungszeit im Wesentlichen nach der Schichtdicke und nach der Anzahl der bereits aufgetragenen Schichten. Die Trocknungszeit zwischen den einzelnen Beschichtungen reicht von 5 Minuten bis 30 Minuten. Die Trocknungstemperatur beträgt zwischen 50 und 60 ° C. Diese Prozedur muss sehr genau eingehalten werden, da sonst die Schicht auf Grund des hohen Füllstoffanteils zu Blasen und/oder Rissen neigt.

Sobald die Beschichtung gemäß den vorgenannten Arbeitsschritten fertiggestellt ist, wird das beschichtete Substrat in einem Thermalprozess unter Vakuum oder Schutzgas auf Temperaturen oberhalb 1.600 ° C aufgeheizt.

Bei diesem Thermalprozess kommt es auf Grund der Reaktionsaffinität zwischen Silizium und Kohlenstoff zur Bildung von Siliziumcarbid, größtenteils zu β-SiC, wobei der in der Beschichtung vorhandene Kohlenstoff teilweise mit dem in der aufgetragenen Schicht vorhandenem Silizium und/oder teilweise mit dem im Substrat vorhandenem Restsilizium in der Matrix zu Siliziumcarbid reagiert. Durch einsetzende Diffusionsprozesse zwischen dem Silizium im Substrat und dem Kohlenstoff in der Beschichtung kommt es zu einer Kontaktreaktion durch Bildung von Siliziumcarbid, wodurch es zu einer festen Anbindung der Beschichtung an das Substrat kommt. Durch das in der Beschichtung vorhandene Siliziumcarbid wird gewährleistet, dass sich während des Thermalprozesses eine sehr dichte Oberflächenschicht ausbildet, wobei auf Grund der Porengrößenverteilung eine maximal dichte Kornverteilung erzielt werden kann. Durch eine Auswahl des unter Patentanspruch 1 beschriebenen Stoffsystems kann während des Thermalprozesses erreicht werden, dass die sich ausbildende Schicht keine Porosität weder offene noch geschlossene Porosität, ausbildet und die Schicht keine Fehlstellen aufweist. Nach Ende dieses Thermalprozesses kann das beschichtete Substrat mit für optische Anwendungen handelsüblichen Bearbeitungsmaschinen poliert werden. Diese Beschichtung zeichnet sich hier vor allem auch durch ihre sehr hohe Härte aus, was dazu führt, dass für das Polieren ausschließlich Diamantwerkzeuge verwendet werden können.

Die Vorteile des unter Patentanspruch 1 angeführten Beschichtungsverfahrens von C/SiC-Bauteilen, liegt im Gegensatz zu den bisher bekannten Beschichtungsverfahren in den folgenden Punkten:
1. Das Beschichtungssystem kann in seinen Materialeigenschaften durch Variation der Zusammensetzung des Stoffsystems an die Materialeigenschaften des zu beschichtenden Substrats angepasst werden.
2. Durch die nahezu gleiche Zusammensetzung der Beschichtung wie des zu beschichtenden Substrats kann durch Auftragen der Beschichtung die Reparatur bzw. die Versiegelung von Oberflächen erfolgen, ohne dass es zu Beeinträchtigungen der Materialqualität des Substrats kommt.
3. Durch dieses Beschichtungsverfahren können auch großflächige Bauteile bis zu einem Durchmesser von 2,5 m gleichmäßig beschichtet werden.
4. Durch die Verwendung von handelsüblichen Lackiersystemen ist dieses Beschichtungsverfahren im Gegensatz zu den bisher bekannten Beschichtungen für derartige Bauteile wie CVD-Verfahren oder Sputtern wesentlich kostengünstiger und dadurch wirtschaftlicher einzusetzen.
5. Die Schichtdicke kann bei diesem Verfahren wesentlich größer werden als bei den bisher bekannten Beschichtungsverfahren. Es können Schichtdicken von bis zu 1 mm gleichmäßig und reproduzierbar realisiert werden.
6. Die Beschichtung von Substraten kann je nach Anwendungsfall und Bauteilanforderungen auch gezielt nur partiell aufgebracht werden. Insbesondere ist dieses partielle Aufbringen von Beschichtungen auf Substraten im Gegensatz zu den bisher bekannten Verfahren deutlich kostengünstiger und auch schneller zu realisieren.

## Patentansprüche

1. Verfahren zum Herstellen eines kohlenstofffaserverstärkten SiC-keramischen Bauteils mit einer festen keramischen und porenfreien Beschichtung, die nach dem Auftragen eine sehr dichte Packung aufweist, wobei folgende Schritte durchgeführt werden:
- zur Verfügungstellen des kohlenstofffaserverstärkten keramischen Bauteils;
- Herstellung einer Suspension mittels folgender Schritte:
- Herstellen eines Gemischs durch Zugabe von Siliziumcarbidpulver, Bindemittel, Lösungsmittel und Kohlenstoff und gegebenenfalls metallischem Pulver;
- Homogenisieren und Einstellen einer Viskosität des Gemischs durch Zugabe von Lösungsmittel;
- Aufbringen der Suspension auf das kohlenstofffaserverstärkte keramische Bauteil;
- Trocknen der aufgebrachten Suspension; und
- Aufheizen des Bauteils mit der getrockneten Suspension auf Temperaturen oberhalb 1.600 °C unter Vakuum oder Schutzgas.

2. Verfahren nach Anspruch 1,
**dadurch gekennzeichnet, dass**
als Bindemittel Phenolharze, Polysiloxane oder Phosphate verwendet werden.

3. Verfahren nach Anspruch 1 oder 2,
**dadurch gekennzeichnet, dass**
als Lösungsmittel ein Gemisch aus Isopropylalkohol, Butylacetat, Butandiol und Polyethylenglykol verwendet wird.

4. Verfahren nach einem der Ansprüche 1 bis 3,
**dadurch gekennzeichnet, dass**
metallisches Siliziumpulver mit einer Korngröße < 45 µm, vorzugsweise 5 µm verwendet wird.

5. Verfahren nach einem der Ansprüche 1 bis 4,
**dadurch gekennzeichnet, dass**
das Siliziumcarbidpulver mit einer annährend lückenlosen kontinuierlichen Korngrößenverteilung bei einer maximalen Korngröße von < 50 µm verwendet wird.

6. Verfahren nach einem der Ansprüche 1 bis 5,
**dadurch gekennzeichnet, dass**
Kohlenstoff in Form von Feinstgraphit und/oder Ruß verwendet wird.

7. Verfahren nach einem der vorhergehenden Ansprüche,
**dadurch gekennzeichnet, dass**
die Suspension mit Hilfe eines Spritzlackierwerkzeuges mit permanenter Rührung oder durch Rakeln unter Ausbildung von zumindest einer Schicht auf eine Oberfläche des kohlenstofffaserverstärkten keramischen Bauteils aufgetragen wird.

8. Verfahren nach einem der vorhergehenden Ansprüche,
**dadurch gekennzeichnet, dass**
die Suspension schichtweise, je nach Anwendung mehrmals nacheinander aufgetragen wird, wobei zwischen einzelnen Auftragschritten ein Trocknungsprozess durchgeführt wird.

9. Verfahren nach einem der vorhergehenden Ansprüche,
**dadurch gekennzeichnet, dass**
die aufgetragene Schicht in einem Thermalprozess bei Temperaturen oberhalb 1600°C unter Vakuum oder Schutzgas aufgeheizt wird und sich durch Reaktion zwischen metallischem Silizium entweder aus dem Substrat und/oder der Suspension und dem vorhandenen Kohlenstoff Siliziumcarbid ausbildet und eine homogene geschlossene Schicht bildet, die durch das vorhandene SIC-Pulver verdichtet wird.

10. Verfahren nach einem der vorhergehenden Ansprüche,
**dadurch gekennzeichnet, dass**
sich die keramische Schicht während des Thermalprozesses über Diffusionsprozesse mit Silizium aus dem keramischen Substrat anreichert, wobei das Silizium mit dem vorhandenen Kohlenstoff zu Siliziumcarbid reagiert wodurch eine feste Verbindung zwischen der Schicht und dem keramischen Substrat erzeugt wird.

11. Verfahren nach einem der vorhergehenden Ansprüche,
**dadurch gekennzeichnet, dass**
die keramische Beschichtung nach dem Thermalprozess keine geschlossene oder offene Porosität aufweist und mit geeignetem Polierwerkzeug bis auf Rauhtiefen < 1 µm bearbeitet werden kann.

12. Verfahren nach einem der vorhergehenden Ansprüche,
**dadurch gekennzeichnet, dass**
als zu beschichtendes keramisches Substrat kohlenstofffaserverstärktes Siliziumcarbid (C/SiC) verwendet wird, wobei im Substrat vorhandenes Restsilizium als Spendersilizium für die keramische Schicht verwendet wird.

## Claims

1. Method of manufacturing a carbon fibre reinforced SiC-ceramic component with a rigid ceramic, pore-free coating, which displays a very dense packing after coating, the following stages being carried out:
- making available the carbon fibre reinforced ceramic component;
- preparing a suspension by means of the following stages:
- preparing a mixture by adding silicon carbide powder, binding agent, solvent and carbon and optionally metallic powder;
- homogenising and adjusting viscosity of the mixture by adding solvent;
- applying the suspension to the carbon fibre reinforced ceramic component;
- drying the suspension applied; and
- heating the component with the dried suspension to temperatures above 1,600 °C under vacuum or inert gas.

2. Method according to claim 1,
c h a r a c t e r i s e d i n that
phenol resins, polysiloxanes or phosphates are used as binding agents.

3. Method according to claim 1 or 2,
**characterised in that**
a mixture of isopropyl alcohol, butyl acetate, butanediol and polyethylene glycol is used as solvent.

4. Method according to any of claims 1 to 3,
**characterised in that**
metallic silicon powder with a particle size < 45 µm, preferably 5 µm, is used.

5. Method according to any of claims 1 to 4,
**characterised in that**
the silicon carbide powder used has an approximately gap-free, continuous particle size distribution with a maximum particle size < 50 µm.

6. Method according to any of claims 1 to 5,
**characterised in that**
carbon in the form of ultra-fine graphite and/or soot is used.

7. Method according to any of the afore-mentioned claims,
**characterised in that**
the suspension is applied to the surface of the carbon fibre reinforced ceramic component with the aid of a spray paint tool under permanent agitation or using doctor blades, forming at least one layer.

8. Method according to any of the afore-mentioned claims,
**characterised in that**
the suspension is applied in layers, depending on the application in several, subsequent layers, a drying process being carried out between individual application stages.

9. Method according to any of the afore-mentioned claims,
**characterised in that**
the applied layer is heated in a thermal process at temperatures above 1600 °C under vacuum or inert gas and forms silicon carbide by reaction between metallic silicon either from the substrate and/or the suspension and the carbon present and produces a homogeneous sealed layer, which is compacted by the SiC powder present.

10. Method according to any of the afore-mentioned claims,
**characterised in that**
the ceramic layer builds up during the thermal process via diffusion processes with silicon from the ceramic substrate, the silicon reacting with the carbon present to form silicon carbide, a strong bond between the layer and the ceramic substrate being created.

11. Method according to any of the afore-mentioned claims,
**characterised in that**
the ceramic coating according to the thermal process displays no enclosed or open porosity and can be worked with a suitable polishing tool to surface roughnesses of < 1 µm.

12. Method according to any of the afore-mentioned claims,
**characterised in that**
carbon fibre reinforced silicon carbide (C/SiC) is used as the ceramic substrate to be coated, residual silicon present in the substrate being used as donor silicon for the ceramic layer.

## Revendications

1. Procédé pour la fabrication d'un composant céramique SiC renforcé avec des fibres de carbone, comportant un revêtement céramique résistant et sans pores qui présente après l'application un compactage très dense, dans lequel on effectue les étapes suivantes :
- fourniture du composant céramique renforcé avec des fibres de carbone ;
- préparation d'une suspension au moyen des étapes suivantes :
- préparation d'un mélange par addition de poudre de carbure de silicium, liant, solvant et carbone et éventuellement de poudre métallique ;
- homogénéisation et ajustement de la viscosité du mélange par addition de solvant ;
- application de la suspension sur le composant céramique renforcé avec des fibres ;
- séchage de la suspension appliquée ; et
- chauffage du composant comportant la suspension séchée, à des températures supérieures à 1 600 °C, sous vide ou gaz protecteur.

2. Procédé selon la revendication 1, **caractérisé en ce qu'**on utilise comme liant des résines phénoliques, des polysiloxanes ou des phosphates.

3. Procédé selon la revendication 1 ou 2, **caractérisé en ce qu'**on utilise comme solvant un mélange d'alcool isopropylique, acétate de butyle, butanediol et polyéthylèneglycol.

4. Procédé selon l'une quelconque des revendications 1 à 3, **caractérisé en ce qu'**on utilise une poudre de silicium métallique ayant une taille de grain < 45 µm, de préférence 5 µm.

5. Procédé selon l'une quelconque des revendications 1 à 4, **caractérisé en ce qu'**on utilise la poudre de carbure de silicium ayant une distribution granulométrique continue à peu près sans lacune, avec une taille maximale de grain de < 50 µm.

6. Procédé selon l'une quelconque des revendications 1 à 5, **caractérisé en ce qu'**on utilise du carbone sous forme de graphite très fin et/ou de noir de carbone.

7. Procédé selon l'une quelconque des revendications précédentes, **caractérisé en ce que** la suspension est appliquée à l'aide d'un outil de pistolage à agitation permanente ou par enduction à la racle avec formation d'au moins une couche sur une surface du composant céramique renforcé avec des fibres de carbone.

8. Procédé selon l'une quelconque des revendications précédentes, **caractérisé en ce que** la suspension est appliquée plusieurs fois successivement par couches, selon l'utilisation, un processus de séchage étant effectué entre les étapes individuelles d'application.

9. Procédé selon l'une quelconque des revendications précédentes, **caractérisé en ce que** la couche appliquée est chauffée, dans un processus thermique, à des températures supérieures à 1 600 °C, sous vide ou gaz protecteur et il se forme, par réaction entre du silicium métallique provenant soit du substrat soit/et de la suspension et le carbone présent, du carbure de silicium et une couche continue homogène qui est compactée par la poudre de SCi présente.

10. Procédé selon l'une quelconque des revendications précédentes, **caractérisé en ce que** pendant le processus thermique la couche céramique s'enrichit en silicium provenant du substrat céramique, le silicium réagissant avec le carbone présent pour donner du carbure de silicium, de sorte qu'un assemblage solide entre la couche et le substrat céramique est produit.

11. Procédé selon l'une quelconque des revendications précédentes, **caractérisé en ce que** le revêtement céramique ne présente après le processus thermique aucune porosité ouverte ou fermée et peut être usiné jusqu'à des profondeurs de rugosité < 1 µm au moyen d'un outil de polissage approprié.

12. Procédé selon l'une quelconque des revendications précédentes, **caractérisé en ce qu'**on utilise en tant que substrat céramique à revêtir du carbure de silicium (C/SiC) renforcé avec des fibres de carbone, le silicium résiduel présent dans le substrat étant utilisé en tant que silicium donneur pour la couche céramique.
